# EUROPÄISCHE PATENTSCHRIFT

(11) **EP 4 285 656 B1**
(45) Veröffentlichungstag und Bekanntmachung des Hinweises auf die Patenterteilung: **22.01.2025**
(21) Anmeldenummer: 22704494.8
(22) Anmeldetag: 25.01.2022
(51) Int. Cl.: H04W 56/00, H04W 4/40

(54) **VERFAHREN UND VORRICHTUNG ZUR ERMITTLUNG UND ZUM UMGANG MIT EINER FEHLERHAFTEN SYSTEMZEIT EINES VERKEHRSTEILNEHMERS**
METHOD AND APPARATUS FOR DETERMINING AND DEALING WITH AN INCORRECT SYSTEM TIME OF A ROAD USER
PROCÉDÉ ET APPAREIL POUR DÉTERMINER ET GÉRER UN TEMPS DE SYSTÈME INCORRECT D'UN UTILISATEUR DE ROUTE

(30) Priorität: 29.01.2021 DE 102021200827
(43) Veröffentlichungstag der Anmeldung: 06.12.2023
(73) Patentinhaber: Continental Automotive Technologies GmbH, 30175 Hannover (DE)
(72) Erfinder: STRUNCK, Sebastian, 81739 München (DE); MENZEL, Marc, 81739 München (DE); GROTENDORST, Thomas, 81739 München (DE)
(74) Vertreter: Continental Corporation
(86) Internationale Anmeldenummer: PCT/DE2022/200008
(87) Internationale Veröffentlichungsnummer: WO 2022/161583

(56) Entgegenhaltungen:
- WO-A1-2017/033486
- US-A1- 2017 237 474
- US-B2- 10 056 931

## Beschreibung

### [TECHNISCHES GEBIET]

Die vorliegende Erfindung betrifft ein Verfahren und eine korrespondierende Vorrichtung insbesondere zur Ermittlung und Umgang mit einer fehlerhaften Systemzeit eines Verkehrsteilnehmers.

### [TECHNISCHER HINTERGRUND]

Werden Fahrzeug zu X (V2X) Nachrichten übermittelt, müssen diese zeitlich eingeordnet werden. Dafür wird grundsätzlich eine Zeitinformation zur Bestimmung der Systemzeit des Senders in den V2X Nachrichten. Die Systemzeit wird üblicherweise mittels eines Zeitsignals eines Globalen Satellitennavigationssignals (GNSS) aktualisiert, um eine möglichst genaue Zeitbasis zu haben.

Eine genaue Zeitbasis wird für die Verarbeitung mittels V2X empfangener Informationen zunehmend wichtiger, um bei voranschreitender Automatisierung von Fahrzeugen die V2X Nachrichten korrekt einordnen zu können. Beispielsweise muss eine empfangene Position eines Verkehrsteilnehmers zu einem konkreten Zeitpunkt korrespondieren bzw. einer empfangenen Systemzeit zuzuordnen sein, um die Position des Verkehrsteilnehmers zu einem bestimmten Zeitpunkt konkret bestimmen zu können. Gerade im Fall beispielsweise der Kollektiven Perzeptionsnachricht ("Collective Perception Message"; "CPM"), mit der Informationen über erfasste Sensorobjekte übertragen werden können, ist der Zeitpunkt der Erfassung durch das Sensorsystem eines sendenden Verkehrsteilnehmers eine kritische Information, auf dessen Basis auf Seiten eines die CPM empfangenden Verkehrsteilnehmers das erfasste Objekt prädiziert werden kann. Auch bei immer weiterer Integration von V2X Technologien steigt die Notwendigkeit der Zeitsychronisation.

Die Offenlegungsschrift WO 2017/033486 A1 bezieht sich auf Datenkommunikationstechniken für den Einsatz in LTE-basierten V2X Systemen. Ein Synchronisationssignal wird an einer Datenschnittstelle gemäß einer vordefinierten Zeitreferenz empfangen, eine zeitliche Synchronisation wird gemäß des Synchronisationssignals bestimmt, und Daten werden entsprechend der zeitlichen Synchronisation gesendet oder empfangen. Des Weiteren kann ein Positionierungssignal an der Datenschnittstelle empfangen werden, eine grobe Zeit-Synchronisation wird dem Positionierungssignal entsprechend durchgeführt; und die grobe Zeit-Synchronisation wird entsprechend dem Synchronisationssignal verfeinert. Die Daten können über V2X übertragen werden.

Die Offenlegungsschrift US 2017/237474 A1 bezieht sich auf V2X-Kommunikation, insbesondere auf V2V-Kommunikation. Eine Vorrichtung umfasst zwei entfernte Antennen, die in einem Fahrzeug positioniert und kommunikativ durch digitale Konnektivität gekoppelt sind, und einen Koordinator, der kommunikativ mit den beiden entfernten Antennen gekoppelt ist und zum Synchronisieren des Betriebs der beiden entfernten Antennen dient.

Als Aufgabe der Erfindung kann es angesehen werden Lösungen zur Ermittlung und zum Umgang mit einer fehlerhaften Systemzeit eines Verkehrsteilnehmers bereitzustellen.

Diese Aufgabe wird durch die Gegenstände der unabhängigen Ansprüche gelöst. Vorteilhafte Ausgestaltungen können beispielsweise den Unteransprüchen entnommen werden. Der Inhalt der Ansprüche wird durch ausdrückliche Inbezugnahme zum Inhalt der Beschreibung gemacht.

Entsprechend eines ersten Aspekts der Offenbarung wird ein Verfahren zur Ausführung durch eine Vorrichtung eines ersten Verkehrsteilnehmers und insbesondere Ermittlung und Umgang mit einer fehlerhaften Systemzeit des ersten Verkehrsteilnehmers oder eines zweiten Verkehrsteilnehmers bereitgestellt, umfassend die Schritte:
- Empfangen einer Fahrzeug zu X (V2X) Nachricht mittels einer V2X Kommunikationsvorrichtung des ersten Verkehrsteilnehmers, wobei die V2X Nachricht eine Zeitinformation zur Bestimmung einer Systemzeit eines zweiten Verkehrsteilnehmers umfasst;
- Ermitteln einer Systemzeit des ersten Verkehrsteilnehmers;
- Vergleichen der Systemzeit des ersten Verkehrsteilnehmers mit der Systemzeit des zweiten Verkehrsteilnehmers, wobei im Fall, dass eine festgestellte Abweichung zwischen der Systemzeit des ersten Verkehrsteilnehmers und der Systemzeit des zweiten Verkehrsteilnehmers gleich einem Grenzwert ist oder den Grenzwert überschreitet, ermittelt wird, ob eine Fehlerhaftigkeit der Systemzeit des ersten Verkehrsteilnehmers oder des zweiten Verkehrsteilnehmers vorliegt; und
- Korrektur der Systemzeit des ersten Verkehrsteilnehmers, wenn eine Fehlerhaftigkeit der Systemzeit des ersten Verkehrsteilnehmers ermittelt wird, oder Ausgabe eines Steuersignals zur Mitteilung einer Fehlerhaftigkeit der Systemzeit des zweiten Verkehrsteilnehmers.

Der zugrundeliegende Gedanke ist, dass eine Überprüfung des Zeitstempels einer von einem Verkehrsteilnehmer ausgesendeten V2X Nachricht mit der Systemzeit eines die V2X Nachricht empfangenden Verkehrsteilnehmers vorgenommen wird, wobei im Falle, dass eine Abweichung zwischen der Zeit des Zeitstempels der V2X Nachricht und der Systemzeit des empfangenden Verkehrsteilnehmers größer als ein Grenzwert ist, von einer fehlerhaften Zeitbasis entweder des Senders oder des Empfängers ausgegangen werden kann. Als fehlerhaft wird hierbei insbesondere angesehen, wenn eine Systemzeit eines betreffenden Verkehrsteilnehmers von einer als Referenzzeit zu betrachtenden Zeitbasis, bspw. eine mittels eines Zeitsignals eines Globalen Satellitennavigationssignals (GNSS) bereitgestellte Zeitbasis, wesentlich abweicht. Als eine wesentliche Abweichung kann angesehen werden, wenn die Differenz zur Referenzzeit gleich oder größer als ein Grenzwert ist, wobei der Grenzwert abhängig vom Anwendungsfall und/oder der jeweiligen Situation ausgestaltet sein kann. Entsprechend wenigstens einer Ausführungsform wird ermittelt, dass die Systemzeit des ersten und/oder des zweiten Verkehrsteilnehmers fehlerhaft ist, wenn die Abweichung zwischen der Systemzeit des ersten Verkehrsteilnehmers und der Systemzeit des zweiten Verkehrsteilnehmers gleich dem Grenzwert ist oder den Grenzwert überschreitet. In vorteilhafter Weise wird somit eine Überprüfung der Systemzeit des ersten und/oder zweiten Verkehrsteilnehmers durch den ersten Verkehrsteilnehmer selbst ermöglicht. Hierdurch ist ein zuverlässigerer Austausch von Informationen realisierbar.

Grundsätzlich kommen als Verkehrsteilnehmer Fahrzeuge, Fußgänger und/oder Radfahrer in Betracht. Bei dem ersten Verkehrsteilnehmer handelt es sich insbesondere um ein Fahrzeug, wobei das Fahrzeug ein Kraftfahrzeug, insbesondere ein Personenkraftfahrzeug, ein Lastkraftfahrzeug, ein Motorrad, ein Elektrokraftfahrzeug oder ein Hybridkraftfahrzeug, ein Wasserfahrzeug oder ein Luftfahrzeug sein kann.

Das Steuersignal zur Mitteilung einer Fehlerhaftigkeit der Systemzeit des zweiten Verkehrsteilnehmers kann beispielsweise für die Anzeige eine Hinweis- und/oder Warnmeldung an einen Fahrer des ersten Fahrzeugs und/oder für eine zumindest teilautomatisierte Fahrfunktion zur Vornahme weiterer Maßnahmen, wie beispielsweise einen Eingriff in die Fahrzeugdynamik, herangezogen werden.

Unter der Systemzeit sei insbesondere die durch die Elektronik bzw. Software beispielsweise eines betreffenden Verkehrsteilnehmers herangezogene lokale Zeitbasis verstanden. Diese lokale Zeitbasis kann mittels eines globalen Zeitsignals, bspw. eines Zeitsignals eines Globalen Satellitennavigationssignals (GNSS), aktualisiert werden.

Entsprechend wenigstens einer Ausführungsform wird ermittelt, dass die Systemzeit des zweiten Verkehrsteilnehmers fehlerhaft ist, wenn auch eine Abweichung zwischen der Systemzeit des zweiten Verkehrsteilnehmers und einer Systemzeit zumindest eines dritten Verkehrsteilnehmers und/oder einer zentralen Datenverarbeitungseinrichtung gleich dem Grenzwert ist oder den Grenzwert überschreitet. Damit würde die Systemzeit des zweiten Verkehrsteilnehmers gleich oder größer dem Grenzwert von der Systemzeit des ersten Verkehrsteilnehmers und zumindest des dritten Verkehrsteilnehmers und/oder der zentralen Datenverarbeitungseinrichtung abweichen, womit davon ausgegangen werden kann, dass die Systemzeit des zweiten Verkehrsteilnehmers fehlerhaft ist. Die zentrale Datenverarbeitungseinrichtung kann beispielsweise ein Internetdienst zur Bereitstellung einer Uhrzeit ausführen und/oder durch eine sogenannte Road Side Unit dargestellt sein. Die Anfrage an die zentrale Datenverarbeitungseinrichtung erfolgt dabei insbesondere mittels eines Mobilfunknetzwerks und/oder V2X Kommunikation.

Entsprechend einer Ausführungsform kann das Verfahren entsprechend auch die Schritte umfassen:
- Empfangen einer Fahrzeug zu X (V2X) Nachricht mittels einer V2X Kommunikationsvorrichtung des ersten Verkehrsteilnehmers, wobei die V2X Nachricht eine Zeitinformation zur Bestimmung einer Systemzeit eines dritten Verkehrsteilnehmers oder einer zentralen Datenverarbeitungsvorrichtung umfasst;
- Ermitteln einer Systemzeit des ersten Verkehrsteilnehmers;
- Vergleichen der Systemzeit des ersten Verkehrsteilnehmers mit der Systemzeit des dritten Verkehrsteilnehmers oder der zentralen Datenverarbeitungsvorrichtung.

Ermittelt der erste Verkehrsteilnehmer eine Fehlerhaftigkeit der Systemzeit des zweiten Verkehrsteilnehmers, sendet der erste Verkehrsteilnehmer in Folge des Steuersignals zur Mitteilung einer Fehlerhaftigkeit der Systemzeit des zweiten Verkehrsteilnehmers entsprechend wenigstens einer Ausführungsform eine V2X Nachricht umfassend einen Identifikator zur Identifizierung des zweiten Verkehrsteilnehmers und eine Information über die Fehlerhaftigkeit der Systemzeit des zweiten Verkehrsteilnehmers mittels der V2X Kommunikationsvorrichtung aus. Insbesondere kann der erste Verkehrsteilnehmer alternativ oder in Ergänzung den Absolutwert der festgestellten Abweichung mit der V2X Nachricht aussenden.

Ermittelt der erste Verkehrsteilnehmer eine Fehlerhaftigkeit der Systemzeit des zweiten Verkehrsteilnehmers, wird in Folge des Steuersignals zur Mitteilung einer Fehlerhaftigkeit der Systemzeit des zweiten Verkehrsteilnehmers, insbesondere um durch die empfangene V2X Nachricht des zweiten Verkehrsteilnehmers umfasste weitere Informationen dennoch zweckmäßig verwerten bzw. weiterverarbeiten zu können, entsprechend wenigstens einer Ausführungsform eine Korrektur der empfangenen Systemzeit des zweiten Verkehrsteilnehmers basierend auf der Systemzeit des ersten Verkehrsteilnehmers, des dritten Verkehrsteilnehmers und/oder der zentralen Datenverarbeitungseinrichtung vorgenommen. Insbesondere kann zur Korrektur der empfangenen Systemzeit des zweiten Verkehrsteilnehmers die empfangene Systemzeit des zweiten Verkehrsteilnehmers gleich der Systemzeit des ersten Verkehrsteilnehmers oder des dritten Verkehrsteilnehmers oder der zentralen Datenverarbeitungseinrichtung gesetzt werden, oder es wird ein erster Abweichungswert aus den Zeitdifferenzen der Systemzeit des ersten Verkehrsteilnehmers und/oder des dritten Verkehrsteilnehmers und/oder der zentralen Datenverarbeitungseinrichtung zur Systemzeit des zweiten Verkehrsteilnehmers ermittelt und zur Korrektur der empfangenen Systemzeit des zweiten Verkehrsteilnehmers herangezogen. Hierdurch kann beispielsweise vermieden werden, dass die potenziell sicherheitskritischen Informationen aufgrund einer fehlerhaften Systemzeit des zweiten Verkehrsteilnehmers verworfen werden. Weiterbildungsgemäß kann der erste Verkehrsteilnehmer hierfür eine Korrektur der empfangenen Systemzeit des zweiten Verkehrsteilnehmers unter Heranziehung von mittels Sensoren des ersten Verkehrsteilnehmers gewonnenen Sensorinformationen vor.

Eine Korrektur kann weiterbildungsgemäß auch für auf die nachfolgend eingegangenen V2X Nachrichten, umfassend eine Zeitinformation zur Bestimmung einer Systemzeit des zweiten Verkehrsteilnehmers, in Abhängigkeit der jeweils festgestellten Abweichung vorgenommen werden. Insbesondere im Vergleich zu einer dauerhaften Anwendung der erstmalig vorgenommenen Korrektur in entsprechender Höhe kann hierdurch sichergestellt werden, dass beispielsweise eine Korrektur nicht vorgenommen wird, wenn der zweite Verkehrsteilnehmer seinerseits eine Korrektur der eigenen Zeitbasis zwischen der Aussendung zweier die Zeitinformationen umfassenden V2X Nachrichten vorgenommen hat.

Entsprechend wenigstens einer Ausführungsform wird ermittelt, dass die Systemzeit des ersten Verkehrsteilnehmers fehlerhaft ist, wenn eine Abweichung zwischen der Systemzeit des ersten Verkehrsteilnehmers und einer Systemzeit zumindest eines dritten Verkehrsteilnehmers und/oder einer zentralen Datenverarbeitungseinrichtung gleich dem Grenzwert ist oder den Grenzwert überschreitet.

Entsprechend wenigstens einer Ausführungsform kann der Grenzwert für positive wie negative Differenzen symmetrisch oder asymmetrisch ausgestaltet sein.

Eine symmetrische Ausführung des Grenzwerts kann insbesondere von Vorteil sein, wenn eine Übertragungszeit und ggf. Verarbeitungszeit der V2X Nachricht von dem zweiten Verkehrsteilnehmer zu dem ersten Verkehrsteilnehmer berücksichtigt werden soll. Diese Übertragungszeit und ggf. Verarbeitungszeit kann bzw. können beispielsweise geschätzt werden. Die ermittelte Differenz (td) der Systemzeit des ersten Verkehrsteilnehmers (t1) zur Systemzeit des zweiten Verkehrsteilnehmers ergibt sich unter dieser Maßgabe zu td = t1 - (t2 + tk). Diese Differenz kann nun mit dem symmetrischen Grenzwert verglichen werden.

Eine asymmetrische Ausführung des Grenzwerts kann insbesondere von Vorteil sein, wenn eine Übertragungszeit und ggf. Verarbeitungszeit der V2X Nachricht von dem zweiten Verkehrsteilnehmer zu dem ersten Verkehrsteilnehmer nicht berücksichtigt werden soll. Die ermittelte Differenz (td) der Systemzeit des ersten Verkehrsteilnehmers (t1) zur Systemzeit des zweiten Verkehrsteilnehmers ergibt sich unter dieser Maßgabe zu td = t1 - t2. Diese Differenz kann nun mit dem asymmetrischen Grenzwert verglichen werden, wobei insbesondere positive Differenzen im Rahmen des Grenzwerts größer ausgebildet sein können als negative Differenzen der Systemzeiten.

Dem liegt der Gedanke zugrunde, dass wenn der erste Verkehrsteilnehmer eine von zumindest zwei verschiedenen Verkehrsteilnehmern und/oder dem zweiten Verkehrsteilnehmer und der zentralen Datenverarbeitungseinrichtung abweichende Zeitbasis hat, mit hoher Wahrscheinlichkeit die Zeitbasis des ersten Verkehrsteilnehmers fehlerhaft ist.

Die solchermaßen empfangene Zeitinformation zur Bestimmung einer Systemzeit eines dritten Verkehrsteilnehmers und/oder einer zentralen Datenverarbeitungsvorrichtung kann dementsprechend außerdem für den Vergleich mit der Systemzeit des ersten Verkehrsteilnehmers herangezogen werden.

Ermittelt der erste Verkehrsteilnehmer eine Fehlerhaftigkeit der Systemzeit des ersten Verkehrsteilnehmers, wird eine Korrektur der Systemzeit des ersten Verkehrsteilnehmers basierend auf der Systemzeit des zweiten Verkehrsteilnehmers, des dritten Verkehrsteilnehmers und/oder der zentralen Datenverarbeitungseinrichtung vorgenommen.

Weiterbildungsgemäß wird zur Korrektur der Systemzeit des ersten Verkehrsteilnehmers die empfangene Systemzeit des zweiten Verkehrsteilnehmers oder des dritten Verkehrsteilnehmers oder der zentralen Datenverarbeitungseinrichtung gleich der Systemzeit des ersten Verkehrsteilnehmers gesetzt, oder es wird ein Abweichungswert aus den Zeitdifferenzen der Systemzeit des zweiten Verkehrsteilnehmers und/oder des dritten Verkehrsteilnehmers und/oder der zentralen Datenverarbeitungseinrichtung zur Systemzeit des ersten Verkehrsteilnehmers ermittelt und zur Korrektur der Systemzeit des ersten Verkehrsteilnehmers herangezogen. Insbesondere wird zur Bildung der korrigierten Systemzeit des ersten Verkehrsteilnehmers der ermittelte Abweichungswert zur Systemzeit des ersten Verkehrsteilnehmers addiert.

Weiterbildungsgemäß kann die durch den ersten Verkehrsteilnehmer empfangene V2X Nachricht Konfidenzinformationen zur Beschreibung eines Konfidenzwerts der Systemzeit des zweiten Verkehrsteilnehmers und/oder eine durch den ersten Verkehrsteilnehmer ausgesandte V2X Nachricht Konfidenzinformationen zur Beschreibung eines Konfidenzwerts der Systemzeit des ersten Verkehrsteilnehmers und/oder des zweiten Verkehrsteilnehmers umfassen. Einerseits können bereits Konfidenzinformationen über die Genauigkeit der ermittelten Systemzeit durch den zweiten Verkehrsteilnehmer bereitgestellt werden, andererseits ermittelte Konfidenzinformationen der Systemzeit des ersten Verkehrsteilnehmers und/oder des zweiten Verkehrsteilnehmers anderen Verkehrsteilnehmern bzw. dem zweiten Verkehrsteilnehmer bereitgestellt werden. Der Konfidenzwert kann insbesondere für die Bewertung des Vertrauensintervalls der bereitgestellten Systemzeit herangezogen werden. Wurde durch den ersten Verkehrsteilnehmer eine fehlerhafte eigene Systemzeit ermittelt und wurde die eigene Systemzeit unter Heranziehung der Systemzeit des zweiten Verkehrsteilnehmers und/oder des dritten Verkehrsteilnehmers und/oder der zentralen Datenverarbeitungseinrichtung korrigiert, kann der Konfidenzwert zur Beschreibung des Konfidenzintervalls dienen. Besteht beispielsweise kein GPS-Empfang verringert sich der Konfidenzwert in Abhängigkeit einer Güte einer Zeitfortschreibung ohne Möglichkeit der Synchronisierung auf eine durch insbesondere ein globales Satellitennavigationssystem (GNSS) bereitgestellte Zeit. Dieses Ausbleiben eines GNSS Empfangs kann beispielsweise bei Fahrt in einem Tunnel oder Bergwerk eintreten.

Weiterbildungsgemäß kann vorgesehen sein die Konfidenzinformation mittels des sogenannten "DE_TimeAccuracy" Datenelements des "DE_FullPositionVector" der Basic Safety Message (BSM) gemäß SAE J2735, z.B. gekennzeichnet durch einen Wert von 1s und/oder mittels des "Performance dass" Datenfeldes einer Cooperative Awareness Message (CAM) gemäß ETSI-Standard, z.B. gekennzeichnet durch die niedrigste Klasse, abzubilden.

Entsprechend eines zweiten Aspekts der Offenbarung wird eine Vorrichtung für einen ersten Verkehrsteilnehmer beschrieben, konfiguriert folgende Schritte auszuführen:
- Empfangen einer Fahrzeug zu X (V2X) Nachricht mittels einer V2X Kommunikationsvorrichtung der Vorrichtung, wobei die V2X Nachricht eine Zeitinformation zur Bestimmung einer Systemzeit eines zweiten Verkehrsteilnehmers umfasst;
- Ermitteln einer Systemzeit des ersten Verkehrsteilnehmers, insbesondere mittels einer Recheneinrichtung der Vorrichtung;
- Vergleichen der Systemzeit des ersten Verkehrsteilnehmers mit der Systemzeit des zweiten Verkehrsteilnehmers insbesondere mittels der Recheneinrichtung und/oder einer weiteren Recheneinrichtung der Vorrichtung, wobei im Fall, dass eine festgestellte Abweichung zwischen der Systemzeit des ersten Verkehrsteilnehmers und der Systemzeit des zweiten Verkehrsteilnehmers gleich einem Grenzwert ist oder den Grenzwert überschreitet, ermittelt wird, ob eine Fehlerhaftigkeit der Systemzeit des ersten Verkehrsteilnehmers oder des zweiten Verkehrsteilnehmers vorliegt; und
- Korrektur der Systemzeit des ersten Verkehrsteilnehmers, wenn eine Fehlerhaftigkeit der Systemzeit des ersten Verkehrsteilnehmers ermittelt wird, oder Ausgabe eines Steuersignals zur Mitteilung einer Fehlerhaftigkeit der Systemzeit des zweiten Verkehrsteilnehmers insbesondere durch die Recheneinrichtung und/oder die weitere Recheneinrichtung.

Gemäß einem weiteren Aspekt der Erfindung ist die Vorrichtung eingerichtet, ein Verfahren nach wenigstens einem der beschriebenen Ausführungsformen durchzuführen.

Zweckmäßigerweise umfasst die Vorrichtung eine Recheneinrichtung zur Ausführung eines oder mehrerer Schritte wenigstens eines der beschriebenen Ausführungsformen des Verfahrens. Eine Recheneinrichtung kann jedwede Einrichtung sein, die ausgebildet ist Signale zu verarbeiten. Insbesondere kann die Recheneinrichtung ein Prozessor, beispielsweise ein ASIC, ein FPGA, ein digitaler Signalprozessor, ein Hauptprozessor (CPU von engl.: "Central Processing Unit"), ein Multizweckprozessor (MPP von engl.: "Multi Purpose Prozessor") oder Ähnliches sein.

In einer Weiterbildung der angegebenen Vorrichtung weist die angegebene Vorrichtung einen Speicher auf. Dabei ist das angegebene Verfahren in Form eines Computerprogramms in dem Speicher hinterlegt und die Recheneinrichtung zur Ausführung des Verfahrens vorgesehen, wenn das Computerprogramm aus dem Speicher in die Recheneinrichtung geladen ist.

Gemäß einem weiteren Aspekt der Erfindung umfasst ein Computerprogramm Programmcodemittel, um alle Schritte eines der angegebenen Verfahren durchzuführen, wenn das Computerprogramm auf einem Computer oder einer der angegebenen Vorrichtungen ausgeführt wird.

Gemäß einem weiteren Aspekt der Erfindung enthält ein Computerprogrammprodukt einen Programmcode, der auf einem computerlesbaren Datenträger gespeichert ist und der, wenn er auf einer Datenverarbeitungseinrichtung ausgeführt wird, eines der angegebenen Verfahren durchführt.

Entsprechend eines weiteren Aspekts betrifft die Offenbarung die Verwendung zumindest eine der Ausführungsformen der Vorrichtung in einem Fahrzeug.

### [DETAILLIERTE BESCHREIBUNG DER FIGUREN]

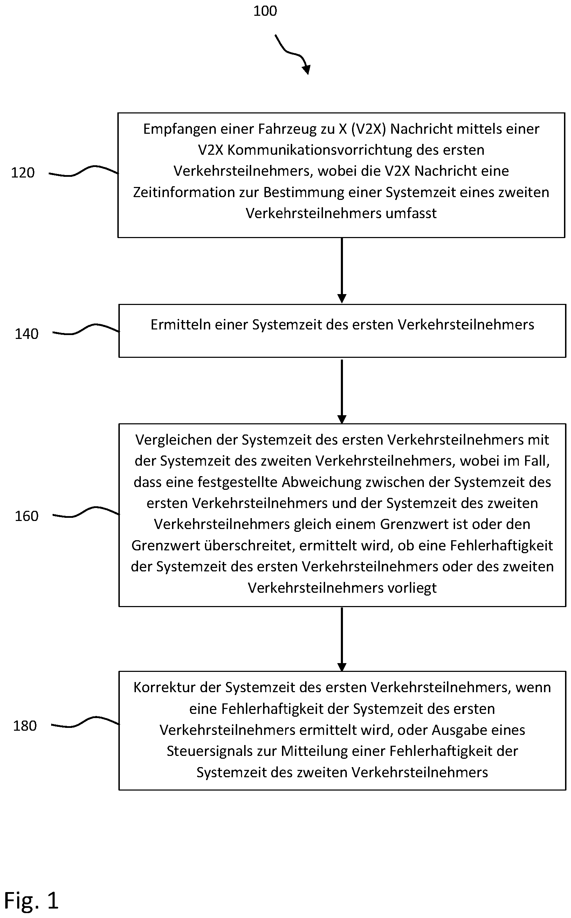

Die Fig. 1 zeigt in Form eines Ablaufdiagrams eine Ausführungsform des Verfahren 100 zur Ausführung durch eine Vorrichtung eines ersten Verkehrsteilnehmers gemäß der Offenbarung. Dabei wird in einem Schritt 120 eine Fahrzeug zu X (V2X) Nachricht mittels einer V2X Kommunikationsvorrichtung des ersten Verkehrsteilnehmers empfangen, wobei die V2X Nachricht eine Zeitinformation zur Bestimmung einer Systemzeit eines zweiten Verkehrsteilnehmers umfasst und in einem Schritt 140 eine Systemzeit des ersten Verkehrsteilnehmers ermittelt. In einem Schritt 160 werden die Systemzeit des ersten Verkehrsteilnehmers mit der Systemzeit des zweiten Verkehrsteilnehmers verglichen, wobei im Fall, dass eine festgestellte Abweichung zwischen der Systemzeit des ersten Verkehrsteilnehmers und der Systemzeit des zweiten Verkehrsteilnehmers gleich einem Grenzwert ist oder den Grenzwert überschreitet, ermittelt wird, ob eine Fehlerhaftigkeit der Systemzeit des ersten Verkehrsteilnehmers oder des zweiten Verkehrsteilnehmers vorliegt. In einem Schritt 180 erfolgt eine Korrektur der Systemzeit des ersten Verkehrsteilnehmers, wenn eine Fehlerhaftigkeit der Systemzeit des ersten Verkehrsteilnehmers ermittelt wird, oder eine Ausgabe eines Steuersignals zur Mitteilung einer Fehlerhaftigkeit der Systemzeit des zweiten Verkehrsteilnehmers.

Sofern sich im Laufe des Verfahrens herausstellt, dass ein Merkmal oder eine Gruppe von Merkmalen nicht zwingend nötig ist, so wird anmelderseitig bereits jetzt eine Formulierung zumindest eines unabhängigen Anspruchs angestrebt, welcher das Merkmal oder die Gruppe von Merkmalen nicht mehr aufweist. Hierbei kann es sich beispielsweise um eine Unterkombination eines am Anmeldetag vorliegenden Anspruchs oder um eine durch weitere Merkmale eingeschränkte Unterkombination eines am Anmeldetag vorliegenden Anspruchs handeln. Derartige neu zu formulierende Ansprüche oder Merkmalskombinationen sind als von der Offenbarung dieser Anmeldung mit abgedeckt zu verstehen.

Es sei ferner darauf hingewiesen, dass Ausgestaltungen, Merkmale und Varianten der Erfindung, welche in den verschiedenen Ausführungen oder Ausführungsbeispielen beschriebenen und/oder in den Figuren gezeigt sind, beliebig untereinander kombinierbar sind. Einzelne oder mehrere Merkmale sind beliebig gegeneinander austauschbar. Hieraus entstehende Merkmalskombinationen sind als von der Offenbarung dieser Anmeldung mit abgedeckt zu verstehen.

Rückbezüge in abhängigen Ansprüchen sind nicht als ein Verzicht auf die Erzielung eines selbständigen, gegenständlichen Schutzes für die Merkmale der rückbezogenen Unteransprüche zu verstehen. Diese Merkmale können auch beliebig mit anderen Merkmalen kombiniert werden.

Merkmale, die lediglich in der Beschreibung offenbart sind oder Merkmale, welche in der Beschreibung oder in einem Anspruch nur in Verbindung mit anderen Merkmalen offenbart sind, können grundsätzlich von eigenständiger erfindungswesentlicher Bedeutung sein. Sie können deshalb auch einzeln zur Abgrenzung vom Stand der Technik in Ansprüche aufgenommen werden.

Allgemein sei darauf hingewiesen, dass unter Fahrzeug-zu-X Kommunikation insbesondere eine direkte Kommunikation zwischen Fahrzeugen und/oder zwischen Fahrzeugen und Infrastruktureinrichtungen verstanden wird. Beispielsweise kann es sich also um Fahrzeug-zu-Fahrzeug Kommunikation oder um Fahrzeug-zu-Infrastruktur Kommunikation handeln. Sofern im Rahmen dieser Anmeldung auf eine Kommunikation zwischen Fahrzeugen Bezug genommen wird, so kann diese grundsätzlich beispielsweise im Rahmen einer Fahrzeug-zu-Fahrzeug Kommunikation erfolgen, welche typischerweise ohne Vermittlung durch ein Mobilfunknetz oder eine ähnliche externe Infrastruktur erfolgt und welche deshalb von anderen Lösungen, welche beispielsweise auf ein Mobilfunknetz aufbauen, abzugrenzen ist. Beispielsweise kann eine Fahrzeug-zu-X Kommunikation unter Verwendung der Standards IEEE 802.11p oder IEEE 1609.4 oder 5G NR erfolgen. Eine Fahrzeug-zu-X Kommunikation kann auch als C2X-Kommunikation oder V2X-Kommunikation bezeichnet werden. Die Teilbereiche können als C2C (Car-to-Car), V2V (Vehicle-to-Vehicle) oder C2I (Car-to-Infrastructure), V2I (Vehicle-to-Infrastrukture) bezeichnet werden. Die Erfindung schließt jedoch Fahrzeug-zu-X Kommunikation mit Vermittlung beispielsweise über ein Mobilfunknetz explizit nicht aus.

## Patentansprüche

1. Verfahren zur Ausführung durch eine Vorrichtung eines ersten Verkehrsteilnehmers, umfassend die Schritte:
- Empfangen (120) einer Fahrzeug zu X, V2X, Nachricht mittels einer V2X Kommunikationsvorrichtung des ersten Verkehrsteilnehmers, wobei die V2X Nachricht eine Zeitinformation zur Bestimmung einer Systemzeit eines zweiten Verkehrsteilnehmers umfasst;
- Ermitteln (140) einer Systemzeit des ersten Verkehrsteilnehmers;
- **gekennzeichnet durch**
- Vergleichen (160) der Systemzeit des ersten Verkehrsteilnehmers mit der Systemzeit des zweiten Verkehrsteilnehmers, wobei im Fall, dass eine festgestellte Abweichung zwischen der Systemzeit des ersten Verkehrsteilnehmers und der Systemzeit des zweiten Verkehrsteilnehmers gleich einem Grenzwert ist oder den Grenzwert überschreitet, ermittelt wird, ob eine Fehlerhaftigkeit der Systemzeit des ersten Verkehrsteilnehmers oder des zweiten Verkehrsteilnehmers vorliegt; und
- Korrektur (180) der Systemzeit des ersten Verkehrsteilnehmers, wenn eine Fehlerhaftigkeit der Systemzeit des ersten Verkehrsteilnehmers ermittelt wird, oder Ausgabe eines Steuersignals zur Mitteilung einer Fehlerhaftigkeit der Systemzeit des zweiten Verkehrsteilnehmers.

2. Verfahren gemäß Anspruch 1, wobei ermittelt wird, dass die Systemzeit des zweiten Verkehrsteilnehmers fehlerhaft ist, wenn auch eine Abweichung zwischen der Systemzeit des zweiten Verkehrsteilnehmers und einer Systemzeit zumindest eines dritten Verkehrsteilnehmers und/oder einer zentralen Datenverarbeitungseinrichtung gleich dem Grenzwert ist oder den Grenzwert überschreitet.

3. Verfahren gemäß zumindest einem der vorhergehenden Ansprüche, wobei in Folge des Steuersignals zur Mitteilung einer Fehlerhaftigkeit der Systemzeit des zweiten Verkehrsteilnehmers die Aussendung einer V2X Nachricht, umfassend einen Identifikator zur Identifizierung des zweiten Verkehrsteilnehmers und eine Information über die Fehlerhaftigkeit der Systemzeit des zweiten Verkehrsteilnehmers, vorgenommen wird.

4. Verfahren gemäß zumindest einem der vorhergehenden Ansprüche, wobei zur Verarbeitung von durch die empfangene V2X Nachricht des zweiten Verkehrsteilnehmers umfasste weitere Informationen, in Folge des Steuersignals zur Mitteilung einer Fehlerhaftigkeit der Systemzeit des zweiten Verkehrsteilnehmers, eine Korrektur der Systemzeit des zweiten Verkehrsteilnehmers basierend auf der Systemzeit des ersten Verkehrsteilnehmers, des dritten Verkehrsteilnehmers und/oder der zentralen Datenverarbeitungseinrichtung vorgenommen wird.

5. Verfahren gemäß Anspruch 4, wobei zur Korrektur der empfangenen Systemzeit des zweiten Verkehrsteilnehmers die empfangene Systemzeit des zweiten Verkehrsteilnehmers gleich der Systemzeit des ersten Verkehrsteilnehmers oder des dritten Verkehrsteilnehmers oder der zentralen Datenverarbeitungseinrichtung gesetzt wird, oder es wird ein Abweichungswert aus den Zeitdifferenzen der Systemzeit des ersten Verkehrsteilnehmers und/oder des dritten Verkehrsteilnehmers und/oder der zentralen Datenverarbeitungseinrichtung zur Systemzeit des zweiten Verkehrsteilnehmers ermittelt und zur Korrektur der empfangenen Systemzeit des zweiten Verkehrsteilnehmers herangezogen.

6. Verfahren gemäß zumindest einem der vorhergehenden Ansprüche, wobei ermittelt wird, dass die Systemzeit des ersten Verkehrsteilnehmers fehlerhaft ist, wenn auch eine Abweichung zwischen der Systemzeit des ersten Verkehrsteilnehmers und einer Systemzeit zumindest eines dritten Verkehrsteilnehmers und/oder einer zentralen Datenverarbeitungseinrichtung gleich dem Grenzwert ist oder den Grenzwert überschreitet.

7. Verfahren gemäß Anspruch 6, wobei eine Korrektur der Systemzeit des ersten Verkehrsteilnehmers basierend auf der Systemzeit des zweiten Verkehrsteilnehmers, des dritten Verkehrsteilnehmers und/oder der zentralen Datenverarbeitungseinrichtung vorgenommen wird.

8. Verfahren gemäß Anspruch 7, wobei zur Korrektur der Systemzeit des ersten Verkehrsteilnehmers die empfangene Systemzeit des zweiten Verkehrsteilnehmers oder des dritten Verkehrsteilnehmers oder der zentralen Datenverarbeitungseinrichtung gleich der Systemzeit des ersten Verkehrsteilnehmers gesetzt wird, oder es wird ein Abweichungswert aus den Zeitdifferenzen der Systemzeit des zweiten Verkehrsteilnehmers und/oder des dritten Verkehrsteilnehmers und/oder der zentralen Datenverarbeitungseinrichtung zur Systemzeit des ersten Verkehrsteilnehmers ermittelt und zur Korrektur der Systemzeit des ersten Verkehrsteilnehmers herangezogen.

9. Verfahren gemäß zumindest einem der vorhergehenden Ansprüche, wobei die durch den ersten Verkehrsteilnehmer empfangene V2X Nachricht Konfidenzinformationen zur Beschreibung eines Konfidenzwerts der Systemzeit des zweiten Verkehrsteilnehmers und/oder eine durch den ersten Verkehrsteilnehmer ausgesandte V2X Nachricht Konfidenzinformationen zur Beschreibung eines Konfidenzwerts der Systemzeit des ersten Verkehrsteilnehmers und/oder des zweiten Verkehrsteilnehmers umfassen.

10. Vorrichtung für einen ersten Verkehrsteilnehmer, konfiguriert folgende Schritte auszuführen:
- Empfangen (120) einer Fahrzeug zu X, V2X, Nachricht mittels einer V2X Kommunikationsvorrichtung des ersten Verkehrsteilnehmers, wobei die V2X Nachricht eine Zeitinformation zur Bestimmung einer Systemzeit eines zweiten Verkehrsteilnehmers umfasst;
- Ermitteln (140) einer Systemzeit des ersten Verkehrsteilnehmers;
- **gekennzeichnet durch**
- Vergleichen (160) der Systemzeit des ersten Verkehrsteilnehmers mit der Systemzeit des zweiten Verkehrsteilnehmers, wobei im Fall, dass eine festgestellte Abweichung zwischen der Systemzeit des ersten Verkehrsteilnehmers und der Systemzeit des zweiten Verkehrsteilnehmers gleich einem Grenzwert ist oder den Grenzwert überschreitet, ermittelt wird, ob eine Fehlerhaftigkeit der Systemzeit des ersten Verkehrsteilnehmers oder des zweiten Verkehrsteilnehmers vorliegt; und
- Korrektur (180) der Systemzeit des ersten Verkehrsteilnehmers, wenn eine Fehlerhaftigkeit der Systemzeit des ersten Verkehrsteilnehmers ermittelt wird, oder Ausgabe eines Steuersignals zur Mitteilung einer Fehlerhaftigkeit der Systemzeit des zweiten Verkehrsteilnehmers.

11. Vorrichtung gemäß Anspruch 10, konfiguriert wenigstens ein Verfahren gemäß der Ansprüche 1 bis 9 auszuführen.

12. Verwendung der Vorrichtung gemäß einem der Ansprüche 10 oder 11.

## Claims

1. Method for execution by an apparatus belonging to a first road user, comprising the steps:
- receiving (120) a vehicle-to-X, V2X, message by means of a V2X communication apparatus belonging to the first road user, wherein the V2X message comprises time information for determining a system time of a second road user;
- determining (140) a system time of the first road user;
- **characterized by**
- comparing (160) the system time of the first road user with the system time of the second road user, wherein, if a determined discrepancy between the system time of the first road user and the system time of the second road user is equal to a limit value or exceeds the limit value, it is determined whether the system time of the first road user or of the second road user is incorrect; and
- correcting (180) the system time of the first road user if it is determined that the system time of the first road user is incorrect, or outputting a control signal for communicating that the system time of the second road user is incorrect.

2. Method according to Claim 1, wherein it is determined that the system time of the second road user is incorrect if a discrepancy between the system time of the second road user and a system time of at least one third road user and/or a central data processing device is also equal to the limit value or exceeds the limit value.

3. Method according to at least one of the preceding claims, wherein, as a consequence of the control signal for communicating that the system time of the second road user is incorrect, a V2X message is transmitted, comprising an identifier for identifying the second road user and information about the system time of the second road user being incorrect.

4. Method according to at least one of the preceding claims, wherein, for processing further information included in the V2X message received from the second road user, as a consequence of the control signal for communicating that the system time of the second road user is incorrect, the system time of the second road user is corrected based on the system time of the first road user, the third road user and/or the central data processing device.

5. Method according to Claim 4, wherein, for correcting the received system time of the second road user, the received system time of the second road user is set equal to the system time of the first road user or the third road user or the central data processing device, or a discrepancy value is ascertained from the time differences of the system time of the first road user and/or the third road user and/or the central data processing device relative to the system time of the second road user and is used for correcting the received system time of the second road user.

6. Method according to at least one of the preceding claims, wherein it is determined that the system time of the first road user is incorrect if a discrepancy between the system time of the first road user and a system time of at least one third road user and/or a central data processing device is also equal to the limit value or exceeds the limit value.

7. Method according to Claim 6, wherein the system time of the first road user is corrected based on the system time of the second road user, the third road user and/or the central data processing device.

8. Method according to Claim 7, wherein, for correcting the system time of the first road user, the received system time of the second road user or the third road user or the central data processing device is set equal to the system time of the first road user, or a discrepancy value is ascertained from the time differences of the system time of the second road user and/or the third road user and/or the central data processing device relative to the system time of the first road user and is used for correcting the system time of the first road user.

9. Method according to at least one of the preceding claims, wherein the V2X message received by the first road user comprises confidence information for describing a confidence value of the system time of the second road user and/or a V2X message transmitted by the first road user comprises confidence information for describing a confidence value of the system time of the first road user and/or the second road user.

10. Apparatus for a first road user, configured to carry out the following steps:
- receiving (120) a vehicle-to-X, V2X, message by means of a V2X communication apparatus belonging to the first road user, wherein the V2X message comprises time information for determining a system time of a second road user;
- determining (140) a system time of the first road user;
- **characterized by**
- comparing (160) the system time of the first road user with the system time of the second road user, wherein, if a determined discrepancy between the system time of the first road user and the system time of the second road user is equal to a limit value or exceeds the limit value, it is determined whether the system time of the first road user or of the second road user is incorrect; and
- correcting (180) the system time of the first road user if it is determined that the system time of the first road user is incorrect, or outputting a control signal for communicating that the system time of the second road user is incorrect.

11. Apparatus according to Claim 10, configured to carry out at least a method according to Claims 1 to 9.

12. Use of the apparatus according to either of Claims 10 and 11.

## Revendications

1. Procédé destiné à être mis en oeuvre par un dispositif d'un premier usager de la route, comprenant les étapes suivantes :
- la réception (120) d'un message d'un véhicule à X, V2X, au moyen d'un dispositif de communication V2X du premier usager de la route, le message V2X comprenant une information temporelle destiné à déterminer un temps système d'un deuxième usager de la route ;
- la détermination (140) d'un temps système du premier usager de la route ; **caractérisé par**
- la comparaison (160) du temps système du premier usager de la route au temps système du deuxième usager de la route, dans lequel, dans le cas où un écart établi entre le temps système du premier usager de la route et le temps système du deuxième usager de la route est égal à une valeur limite ou dépasse une valeur limite, il est déterminé si une défectuosité du temps système du premier usager de la route ou du deuxième usager de la route est présente ; et
- la correction (180) du temps système du premier usager de la route si une défectuosité du temps système du premier usager de la route est déterminée, ou l'émission d'un signal de commande pour signaler une défectuosité du temps système du deuxième usager de la route.

2. Procédé selon la revendication 1, dans lequel il est déterminé que le temps système du deuxième usager de la route est défectueux si un écart entre le temps système du deuxième usager de la route et le temps système d'au moins un troisième usager de la route et/ou d'une unité centrale de traitement de données est égal à la valeur limite ou dépasse la valeur limite.

3. Procédé selon au moins l'une des revendications précédentes, dans lequel, à la suite du signal de commande destiné à signaler une défectuosité du temps système du deuxième usager de la route, l'envoi d'un message V2X comprenant un identifiant destiné à identifier le deuxième usager de la route et une information concernant la défectuosité du temps système du deuxième usager de la route est effectué.

4. Procédé selon au moins l'une des revendications précédentes, dans lequel, pour traiter des informations supplémentaires comprises dans le message V2X reçu du deuxième usager de la route, à la suite du signal de commande destiné à signaler une défectuosité du temps système du deuxième usager de la route, une correction du temps système du deuxième usager de la route, basée sur le temps système du premier usager de la route, du troisième usager de la route et/ou de l'unité centrale de traitement de données, est effectuée.

5. Procédé selon la revendication 4, dans lequel, pour corriger le temps système reçu du deuxième usager de la route, le temps système reçu du deuxième usager de la route est ajusté pour être égal au temps système du premier usager de la route ou du troisième usager de la route ou de l'unité centrale de traitement de données, ou une valeur d'écart est déterminée à partir des différences temporelles du temps système du premier usager de la route et/ou du troisième usager de la route et/ou de l'unité centrale de traitement de données par rapport au temps système du deuxième usager de la route, et est utilisée pour corriger le temps système reçu du deuxième usager de la route.

6. Procédé selon au moins l'une des revendications précédentes, dans lequel il est déterminé que le temps système du premier usager de la route est défectueux si un écart entre le temps système du premier usager de la route et un temps système d'au moins un troisième usager de la route et/ou d'une unité centrale de traitement de données est égal à la valeur limite ou dépasse la valeur limite.

7. Procédé selon la revendication 6, dans lequel une correction du temps système du premier usager de la route est effectuée sur la base du temps système du deuxième usager de la route, du troisième usager de la route et/ou de l'unité centrale de traitement de données.

8. Procédé selon la revendication 7, dans lequel, pour corriger le temps système reçu du premier usager de la route, le temps système reçu du deuxième usager de la route ou du troisième usager de la route est ajusté pour être égal au temps système du premier usager de la route ou du troisième usager de la route, ou une valeur d'écart est déterminée à partir des différences temporelles du temps système du deuxième usager de la route et/ou du troisième usager de la route et/ou de l'unité centrale de traitement de données par rapport au temps système du premier usager de la route, et est utilisée pour corriger le temps système du premier usager de la route.

9. Procédé selon au moins l'une des revendications précédentes, dans lequel le message V2X reçu par le premier usager de la route comprend des informations de confiance destinées à décrire une valeur de confiance du temps système du deuxième usager de la route et/ou un message V2X envoyé par le premier usager de la route comprend des informations de confiance destinées à décrire une valeur de confiance du temps système du premier usager de la route et/ou du deuxième usager de la route.

10. Dispositif destiné à un premier usager de la route, configuré pour exécuter les étapes suivantes :
- la réception (120) d'un message d'un véhicule à X, V2X, au moyen d'un dispositif de communication V2X du premier usager de la route, le message V2X comprenant une information temporelle destiné à déterminer un temps système d'un deuxième usager de la route ;
- la détermination (140) d'un temps système du premier usager de la route ; **caractérisé par**
- la comparaison (160) du temps système du premier usager de la route au temps système du deuxième usager de la route, dans lequel, dans le cas où un écart établi entre le temps système du premier usager de la route et le temps système du deuxième usager de la route est égal à une valeur limite ou dépasse une valeur limite, il est déterminé si une défectuosité du temps système du premier usager de la route ou du deuxième usager de la route est présente ; et
- la correction (180) du temps système du premier usager de la route si une défectuosité du temps système du premier usager de la route est déterminée, ou l'émission d'un signal de commande pour signaler une défectuosité du temps système du deuxième usager de la route.

11. Dispositif selon la revendication 10, configuré pour mettre en oeuvre au moins un procédé selon les revendications 1 à 9.

12. Utilisation du dispositif selon l'une quelconque des revendications 10 ou 11.
